(19) Europäisches Patentamt
European Patent Office
Office européen des brevets

(11) Numéro de publication: **0 058 933**
**A1**

(12) **DEMANDE DE BREVET EUROPEEN**

(21) Numéro de dépôt: **82101183.0**

(22) Date de dépôt: **17.02.82**

(51) Int. Cl.³: **F 01 P 7/08,** G 05 D 23/02

(30) Priorité: **20.02.81 FR 8103458**

(43) Date de publication de la demande: **01.09.82 Bulletin 82/35**

(84) Etats contractants désignés: **AT DE GB IT SE**

(71) Demandeur: **DAUPHINOISE THOMSON Société anonyme dite:, 40, rue Marcel Peretto, F-3100 Grenoble (FR)**

(72) Inventeur: **Segura, Jean-Louis, 2, avenue Kennedy, F-38500 Voiron (FR)**

(74) Mandataire: **Casalonga, Axel et al, BUREAU D.A. CASALONGA OFFICE JOSSE & PETIT Baaderstrasse 12-14, D-8000 München 5 (DE)**

(54) **Dispositif pour le contrôle et la régulation de la température en particulier du liquide de refroidissement des moteurs à combustion interne.**

(57) Dispositif pour le contrôle et la régulation en particulier de la température du liquide de refroidissement de moteurs à combustion interne comprenant un boîtier (2) présentant un canal d'entrée (5) et un canal de sortie (6) et un dispositif de régulation (4) comprenant une soupape (11), un dispositif d'actionnement (13) susceptible d'agir sur la soupape (11), un ressort (24) agissant pour pousser la soupape (11) vers le siège de soupape (12), et comprenant en outre un bloc (20) monté sur le boîtier (2) et portant un commutateur qui peut être actionné par l'un des éléments mobiles (19) du dispositif de régulation (4) lors du déplacement de ladite soupape (11) dans le sens qui l'éloigne du siège de soupape (12). Ledit commutateur peut être utilisé pour la mise en route du ventilateur associé au radiateur de refroidissement.

20
21
24
23
22
3
6
25
2
4
1
19
9
8
17
7
5
16
13
18
15
14
11
12
10

EP 0 058 933 A1

0058933

"Dispositif pour le contrôle et la régulation de la température en particulier du liquide de refroidissement des moteurs à combustion interne".

-------

La présente invention concerne un dispositif pour le contrôle et la régulation de la température en particulier du liquide de refroidissement des moteurs à combustion interne.

Actuellement, pour le contrôle et la régulation de la température du liquide de refroidissement de moteurs à combustion interne, on utilise une soupape thermostatique qui régule le débit du liquide de refroidissement dans le radiateur, cette soupape thermostatique comprenant un élément thermostatique contenant de la cire. Dans certaines variantes, ces soupapes sont incorporées à des boîtiers mais il est prévu plusieurs pièces se fixant aux boîtiers ou des boîtiers en plusieurs parties. Par ailleurs, bien souvent le radiateur seul ne suffit pas pour refroidir suffisamment le liquide de refroidissement et on est obligé de lui associer un ventilateur pour accélérer la circulation de l'air autour de ce radiateur. Ce ventilateur est en général mis en route grâce à la fermeture d'un contact électrique qui est commandé par un bilame ou par un élément thermostatique à cire qui est disposé soit avant soit après le radiateur. En conséquence, actuellement, on monte dans le circuit du liquide de refroidissement des moteurs à combustion interne un premier dispositif pour la régulation du débit du liquide de refroidissement dans le radiateur et un deuxième dispositif qui commande le ventilateur. Cette solution nécessite la réalisation d'un nombre de pièces important et l'utilisation de deux éléments sensibles à la température, deux supports de fixation ainsi que d'autres éléments en double.

La présente invention a pour but de remédier aux inconvénients des installations actuellement utilisées et permet de réduire considérablement les frais de construction et de montage par une limitation du nombre des pièces utilisées.

Le dispositif pour le contrôle et la régulation de la température en particulier du liquide de refroidissement des moteurs à combustion interne selon la présente invention est du type comprenant un boîtier ou conduit présentant au moins un passage d'écoulement principal comportant au moins un canal d'entrée et au moins un canal de sortie communiquant et un dispositif de régulation de l'écoulement du liquide dans ledit passage monté dans le boîtier, ce dispositif de régulation comprenant une soupape susceptible de reposer sur un siège de soupape formé dans ledit boîtier pour obturer le passage entre ledit canal d'entrée et ledit canal de sortie, un dispositif d'actionnement susceptible d'agir sur ladite soupape pour l'éloigner dudit siège et un ressort agissant pour pousser ladite soupape vers le siège de soupape du boîtier. Comme il est déjà connu, le dispositif d'actionnement peut être constitué par un élément thermostatique formé par un carter et une tige faisant saillie du carter et contenant une matière sensible à la température telle que de la cire.

Le dispositif selon la présente invention comprend en outre un couvercle monté de façon étanche dans une ouverture du boîtier formée en face de ladite soupape, ledit ressort prenant appui d'une part sur ce couvercle et d'autre part sur une des parties mobiles du dispositif de régulation.

Le dispositif de contrôle et de régulation selon la présente invention peut présenter différentes variantes de réalisation.

Dans une variante, ladite soupape s'ouvrant dans le sens de l'écoulement du fluide et ledit élément thermostatique étant en amont de ladite soupape et ayant sa tige ou son carter maintenu(e) audit boîtier ou à une partie du boîtier et respectivement son carter ou sa tige relié(e) à ladite soupape, ledit couvercle est fixé audit boîtier en aval de ladite soupape en face de celle-ci, ledit ressort étant disposé entre ledit couvercle et ladite soupape.

Dans une autre variante, ladite soupape s'ouvrant dans le sens contraire à l'écoulement et ledit élément thermostatique étant en amont de ladite soupape et ayant sa tige maintenue audit boîtier en aval de ladite soupape et son carter fixé à ladite soupape, ledit couvercle est fixé audit boîtier en amont de ladite soupape en face de celle-ci, le ressort étant disposé entre ladite soupape et ledit couvercle et entourant ledit carter de l'élément thermostatique.

Dans cette variante, ledit couvercle peut comprendre des saillies axiales pour le guidage du carter de l'élément thermostatique.

Selon cette même variante, ledit couvercle peut comprendre un évidement axial pour le guidage du carter de l'élément thermostatique, cet évidement communiquant avec l'extérieur par un passage secondaire formé dans ledit couvercle ou dans ledit couvercle et ledit boîtier et ledit couvercle étant tel que, lorsque la soupape est fermée ou presque fermée, un écoulement de fluide peut se produire de l'intérieur du boîtier vers l'extérieur au travers dudit évidement et dudit passage secondaire. Ainsi, ledit évidement et ledit passage secondaire peuvent former un circuit by-pass qui peut permettre une recirculation directe du liquide de refroidissement dans le moteur même lorsque la soupape est fermée.

Dans une autre variante, le dispositif de commande d'écoulement selon la présente invention peut être du type mélangeur ou du type distributeur. Dans ce cas, ledit boîtier comprend deux canaux d'entrée et un canal de sortie, respectivement un canal d'entrée et deux canaux de sortie, ledit élément thermostatique est disposé dans ledit canal de sortie, respectivement dans le canal d'entrée, ladite soupape présente une partie en forme de cylindre qui obture l'un des canaux d'entrée, respectivement l'un des canaux de sortie, lorsque l'une de ses extrémités est en appui sur le siège de soupape qui entoure ledit canal de sortie, respectivement ledit canal d'entrée, et l'autre canal d'entrée, respectivement l'autre canal de sortie, lorsqu'elle est en position éloignée du siège de soupape et qui permet un mélangeage contrôlé des fluides entrant dans le boîtier, respectivement une distribution contrôlée du fluide vers lesdits canaux de sortie, lorsqu'elle est entre ces deux positions, ledit couvercle est fixé audit boîtier en face de ladite soupape pour coopérer avec la partie cylindrique de la soupape pour obturer ledit autre canal d'entrée, respectivement ledit autre canal de sortie, et ledit ressort est disposé entre ladite soupape et ledit couvercle.

Dans cette variante, ledit couvercle peut comprendre un évidement annulaire axial dans lequel pénètre l'extrémité de la partie cylindrique de ladite soupape.

Dans cette variante également, ladite soupape peut comprendre une partie annulaire d'extrémité s'étendant sensiblement radialement vers l'intérieur de ladite partie en forme de cylindre et susceptible de prendre appui sur ledit siège de soupape et une partie centrale reliée à ladite partie annulaire par des pattes radiales, la partie mobile de l'élément thermostatique prenant appui ou étant fixée à cette partie centrale et ledit ressort étant disposé entre ledit couvercle et ladite partie annulaire radiale.

Selon la présente invention, et quelle que soit la variante de réalisation, ledit couvercle peut être monté dans une ouverture du boîtier dont les dimensions permettent le montage des différentes parties du dispositif de régulation dans le boîtier. D'une manière avantageuse, ledit couvercle peut être monté dans ladite ouverture du boîtier par sertissage.

Selon la présente invention, ledit couvercle peut se présenter sous la forme d'un bloc portant au moins un élément de commande ou de réglage électrique tel qu'un interrupteur, un commutateur, un capteur à réluctance variable, susceptible d'être actionné par l'un des éléments mobiles du dispositif de régulation lorsque la soupape se déplace dans le sens qui l'éloigne du siège de soupape du boîtier. Ainsi, avec un seul dispositif d'actionnement, on peut réguler le débit du liquide de refroidissement et actionner un élément de commande ou de réglage électrique qui peut être utilisé pour la mise en route du ventilateur directement ou indirectement ou pour tout autre commande de régulation.

Selon la présente invention, ledit bloc peut comprendre une tige saillante sur laquelle vient agir ledit élément mobile du dispositif de régulation, tige qui peut agir sur ledit élément de commande ou de réglage électrique. Par ailleurs, il est préférable d'isoler ledit élément du liquide de refroidissement par une membrane d'étanchéité.

Selon la présente invention, il est particulièrement avantageux que ledit élément mobile du dispositif de régulation agisse sur ledit élément de commande ou de réglage électrique uniquement lors de la dilatation résiduelle de la cire que contient l'élément thermostatique. En effet, les cires utilisées dans les éléments thermostatiques présentent sur une plage de température réduite une dilatation principale importante et au-dessus de cette plage de température une dilatation résiduelle faible. Comme la température maximum du liquide de refroidissement correspond sensiblement à l'ouverture maximum de la soupape à la fin de sa dilatation principale, si l'on dispose ledit bloc muni par exemple d'un commutateur convenablement par rapport à l'élément mobile du dispositif de régulation qui agira sur ce commutateur et si ce commutateur est dans le circuit électrique de commande du ventilateur associé au radiateur dans lequel circule le liquide de refroidissement, on ne commandera ou on ne mettra en route le ventilateur que lorsque la température du liquide de refroidissement aura atteint un seuil maximum.

La présente invention sera mieux comprise à l'étude de dispositifs pour le contrôle et la régulation de la température du liquide de refroidissement des moteurs à combustion interne décrits à titre d'exemples non limitatifs et illustrés par le dessin sur lequel :

- la figure 1 représente en coupe un dispositif de contrôle et de régulation comprenant un boîtier et un dispositif de régulation disposé dans le boîtier selon un premier mode de réalisation ;
- la figure 2 montre en coupe une variante de montage du dispositif de régulation du dispositif selon la figure 1 ;
- la figure 3 montre en coupe un dispositif dans lequel le dispositif de régulation présente le même mode de réalisation que celui de la figure 1 mais est monté dans un boîtier différent ;
- la figure 4 montre en coupe un dispositif de contrôle et de régulation comprenant un boîtier dans lequel est monté un dispositif de régulation selon un second mode de réalisation ;
- la figure 5 montre en coupe une variante du dispositif représenté sur la figure 4 dans lequel le boîtier est différent ;
- la figure 6 montre en coupe un dispositif de contrôle et de régulation réalisé sous la forme d'un mélangeur ;
- la figure 7 montre une vue de dessus du dispositif de la figure 6 ;
- la figure 8 montre un bloc muni d'un commutateur qui peut être monté dans l'un des dispositifs de contrôle et de régulation des figures 1 à 3 ;
- et la figure 9 représente en coupe une variante du dispositif représenté sur la figure 1 dans laquelle on a remplacé le commutateur par un capteur à réductance variable.

Dans les dispositifs de contrôle et de régulation que l'on va décrire en référence aux figures, on utilise comme dispositifs d'actionnement des éléments thermostatiques qui comprennent un carter rempli de cire et une tige saillante. Sous l'action de la température, la cire peut se dilater pour provoquer un déplacement relatif du carter et de la tige. On notera également que les cires en général utilisées présentent une dilatation principale importante sur une plage de température faible et une dilatation résiduelle faible au-dessus de cette plage de température.

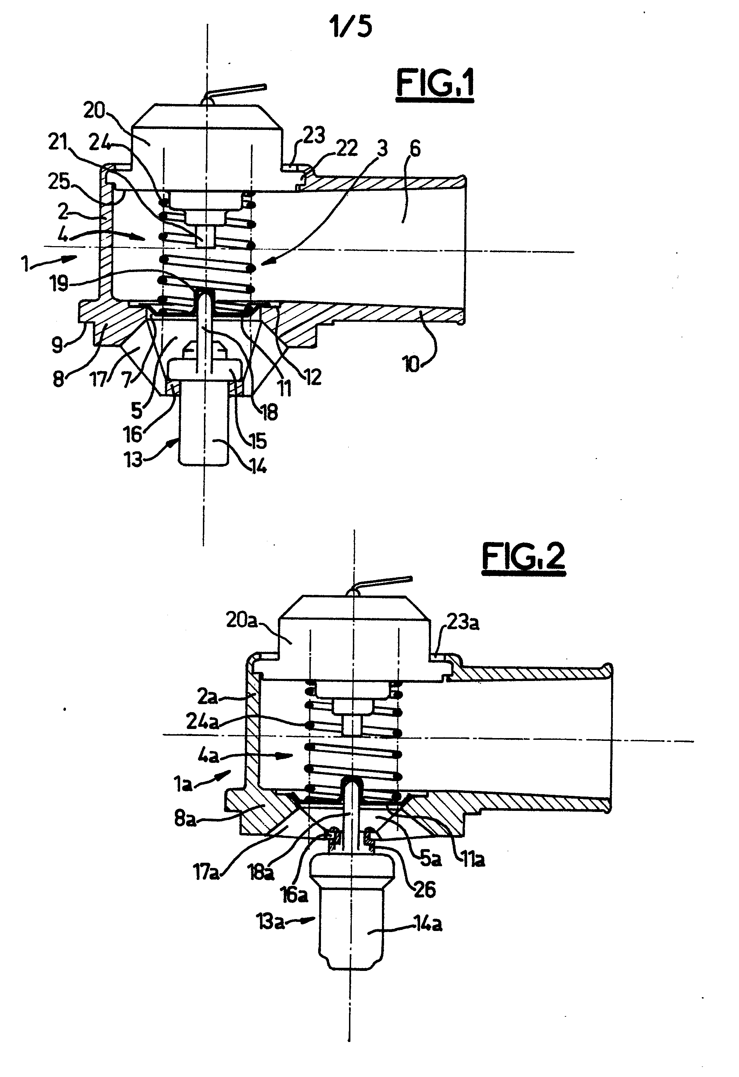

Le dispositif de contrôle et de régulation représenté sur la figure 1 et repéré d'une manière générale par la référence 1 comprend un boîtier 2 qui comporte un passage d'écoulement 3 et dans lequel est monté un dispositif de régulation de l'écoulement dans ce passage d'écoulement 3 repéré d'une manière générale par la référence 4.

Le passage d'écoulement 3 comprend un canal d'entrée 5 et un canal de sortie 6 qui sont sensiblement cylindriques et qui sont disposés sensiblement orthogonalement et communiquent par un passage 7.

La paroi 8 du boîtier 2 entourant le canal d'entrée 5 présente une surface radiale extérieure 9 servant de surface d'appui lors du montage du boîtier 2 sur le moteur associé qui n'a pas été représenté. L'extrémité 2 de la paroi 9 du boîtier 2 entourant le canal de sortie 6 est sensiblement cylindrique et peut recevoir l'extrémité d'une durite non représentée dont l'autre extrémité est montée sur l'entrée d'un radiateur.

Le dispositif de régulation 4 de l'écoulement dans le passage d'écoulement 3 comprend une soupape 11 se présentant sous la forme d'un disque. Cette soupape 11, en position de fermeture, repose sur un siège de soupape 12 réalisé sur le boîtier 2 pour obturer le passage entre le canal d'entrée 5 et le canal de sortie 6. La soupape 11 peut s'ouvrir dans le sens de l'écoulement du fluide du canal d'entrée 5 vers le canal de sortie 6 en se déplaçant selon l'axe du canal d'entrée 5.

Disposé selon l'axe du canal d'entrée 5 et dans ce canal, le dispositif de régulation 4 comprend un élément thermostatique repéré d'une manière générale par la référence 13. Cet élément thermostatique 13 comprend un carter cylindrique 14 qui présente une partie radiale saillante 15 qui vient en appui sur une bague annulaire 16 du boîtier 2 du côté de la soupape 11. La bague annulaire 16 est relié à la paroi 8 du canal d'entrée 5 par des pattes 17 qui permettent un écoulement du fluide entre la bague annulaire 16 et la paroi 8. L'élément thermostatique 13 comprend également une tige 18 qui fait saillie du côté de la soupape 11 et qui pénètre dans une saillie centrale 19 de cette soupape.

Dans la paroi 10 du canal de sortie 6 et en face de la soupape 11 est monté un bloc 20 dans lequel est disposé un commutateur non visible sur cette figure qui peut être actionné lors de l'enfoncement d'une tige centrale 21 qui fait saillie du bloc 20 et qui est disposée en face de la saillie centrale 19 de la soupape 11.

Le bloc 20 présente un bossage radial extérieur 22 qui permet son montage par sertissage dans une ouverture 23 réalisée dans la paroi 10 du boîtier 2.

Le dispositif de régulation 4 comprend également un ressort hélicoïdal 24 centré sur l'axe du canal d'entrée 5 et disposé dans le canal de sortie 6. Ce ressort hélicoïdal 24 prend appui d'une part sur la soupape 11 et d'autre part sur la surface intérieure radiale 25 du bloc 20.

Le diamètre de l'ouverture 23 du boîtier 2 dans laquelle est monté le bloc 20 est suffisamment grand pour permettre le montage des différentes parties du dispositif de régulation 4 par cette ouverture. En effet, pour le montage du dispositif de régulation 4 dans le boîtier 2 au travers de l'ouverture 23 de ce boîtier , on dispose tout d'abord l'élément thermostatique 13 en appui sur la bague annulaire 16 du boîtier 2 avec sa tige 15 du côté de l'ouverture 23, on dispose la soupape 11 de telle sorte que l'extrémité de la tige 15 pénètre dans la saillie centrale 19 de cette soupape, on dispose le ressort hélicoïdal 24 en appui sur la soupape 11 et on dispose le bloc 20 sur ce ressort 24 que l'on comprime de manière à amener le bossage 22 du bloc 20 dans l'ouverture 23 pour le sertissage de ce bloc sur le boîtier 2.

On va maintenant décrire comment fonctionne le dispositif de commande représenté sur la figure 1.

Lorsque l'élément thermostatique 13 est chauffé par le fluide de refroidissement, la cire qu'il contient se dilate et sa tige 15 qui se déplace en direction du bloc 20 provoque l'ouverture de la soupape 11 dans le sens de l'écoulement du fluide en vainquant la force exercée par le ressort hélicoïdal 24. L'ouverture de la soupape 11 dépend évidemment de la température du fluide de refroidissement. Après une certaine ouverture de la soupape 11, la saillie centrale 19 de cette soupape rencontre la tige 21 du bloc 20. Cette tige 21 se trouve alors enfoncée dans le bloc 20 et commande le commutateur qu'il contient. Dans le mouvement contraire de la soupape 11, le commutateur est libéré.

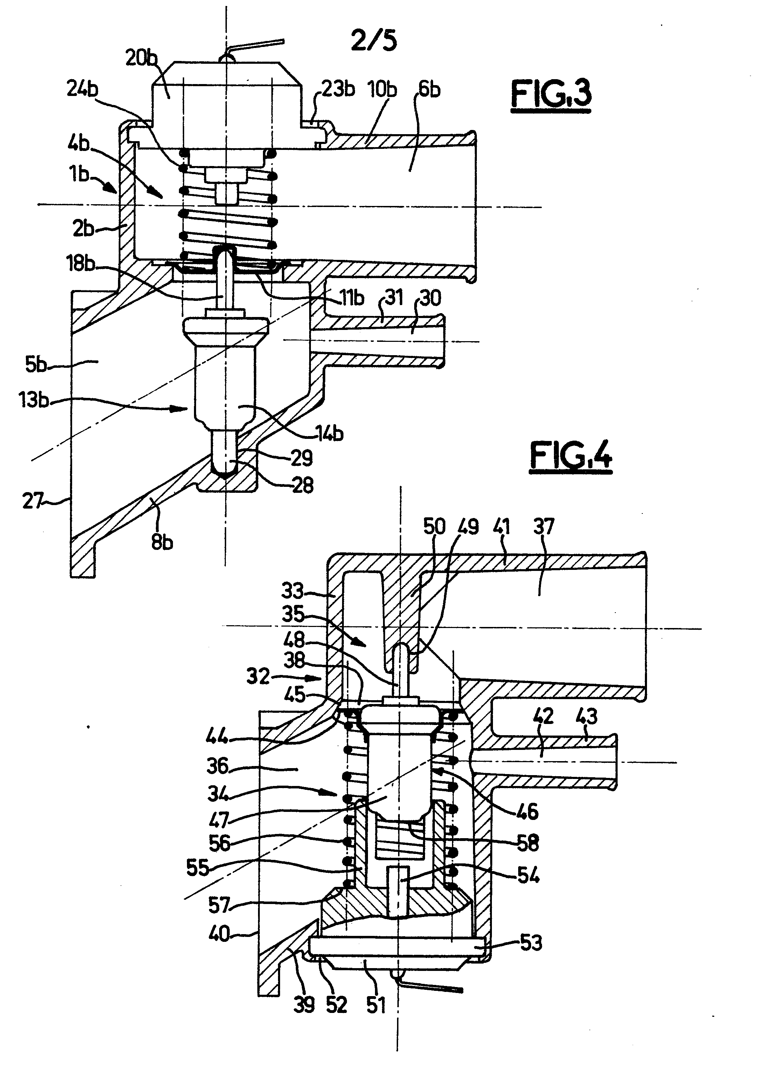

Le dispositif de contrôle et de régulation repéré d'une manière générale par la référence 1<u>a</u> et représenté sur la figure 2 est très proche du dispositif 1 représenté sur la figure 1. Il en diffère essentiellement par le fait que l'élément thermostatique 13<u>a</u> de son dispositif de régulation 4<u>a</u> n'est plus monté par l'ouverture 23a du boîtier 2a dans laquelle est disposé le bloc 20a mais est monté dans l'autre sens. En effet, son carter 14a comporte du côté de sa tige 18a des pattes 26 qui sont serties sur la bague annulaire 16a qui est reliée à la paroi 8a du canal d'entrée 5a par des pattes 17a. En conséquence, l'ouverture 23a du boîtier 2a doit permettre le montage de la soupape 11a, du ressort 24a et du bloc 20a.

Le fonctionnement du dispositif de contrôle et de régulation 1a représenté sur la figure 2 est le même que celui du dispositif représenté sur la figure 1.

Comme on peut le voir sur les figures 1 et 2, les carters 14 et 14a des éléments thermostatiques 13 et 13a des dispositifs de régulation 4 et 4a sont en grande partie disposés à l'extérieur des boîtiers 2 et 2a si bien que le réglage des dispositifs de régulation 4 et 4a peut être effectué aisément.

Le dispositif de contrôle et de régulation représenté sur la figure 3 et repéré d'une manière générale par la référence 1b est également très proche de celui représenté sur la figure 1. Il en diffère essentiellement par le fait que son canal d'entrée 5b se présentant sensiblement sous la forme d'un coude dont la paroi 8b présente une surface d'extrémité 27 sensiblement perpendiculaire à l'axe du canal de sortie 6b et servant de surface d'appui sur le moteur associé lors du montage du boîtier 2b. En outre, le carter 14b de l'élément thermostatique 13b n'est plus en appui sur une bague annulaire du boîtier 2b mais comporte, du côté opposé à sa tige 18b un prolongement 28 qui pénètre dans un trou borgne 29 réalisé dans la paroi 8b du canal d'entrée 5b en face de la soupape 11b. De plus, le boîtier 2b comporte un canal secondaire 30 débouchant dans le canal d'entrée 5b, la paroi 31 de ce canal secondaire 30 pouvant recevoir l'extrémité d'une durite dont l'autre extrémité peut conduire le liquide de refroidissement jusqu'au radiateur de chauffage de l'habitacle du véhicule.

On peut noter que l'ouverture 23b réalisée dans la paroi 10b du boîtier 2b représenté sur la figure 3 doit également permettre le montage par cette ouverture de l'élément thermostatique 13b, de la soupape 11b, du ressort hélicoïdal 24b et du bloc 20b du dispositif de régulation 4b, ce dispositif de régulation fonctionnant de la même manière que celui représenté sur la figure 1.

La figure 4 montre un dispositif de contrôle et de régulation repéré d'une manière générale par la référence 32 comprenant un boîtier 33 proche du boîtier 2b représenté sur la figure 3 mais dans lequel est monté un dispositif de régulation repéré d'une manière générale par la référence 34 de structure différente.

Le boîtier 33 forme un passage d'écoulement principal repéré d'une manière générale par la référence 35 qui comprend un canal d'entrée 36 et un canal de sortie 37. Le canal de sortie 37 est sensiblement droit et le canal d'entrée 36 est sensiblement en forme de coude et communique avec le canal de sortie 37 par un passage 38.

L'extrémité de la paroi 39 du canal en forme de coude 36 comporte une surface 40 sensiblement perpendiculaire à l'axe du canal de sortie 37, cette surface 40 servant d'appui pour le boîtier 33 lors du montage de celui-ci sur un moteur. La partie d'extrémité de la paroi 31 du canal de sortie 37 est sensiblement cylindrique de manière à pouvoir recevoir l'extrémité d'une durite dont l'autre extrémité est branchée à l'entrée du radiateur de refroidissement du fluide de refroidissement.

Le boîtier 33 comporte également un canal secondaire 42 communiquant avec le canal d'entrée 36 de l'autre côté de la surface d'appui 40. L'extrémité de la paroi 43 de ce canal secondaire 42 est sensiblement cylindrique pour recevoir l'extrémité d'une durite dont l'autre extrémité peut être reliée au radiateur de chauffage de l'habitacle du véhicule.

Le dispositif de régulation 34 comprend une soupape 44 qui, en position fermée, repose sur un siège de soupape 45 ménagée dans le boîtier 33 et qui permet d'obturer le passage entre le canal d'entrée 36 et le canal de sortie 37. La soupape 44 est disposée de manière à pouvoir s'ouvrir dans le sens contraire à l'écoulement du liquide dans le passage 35 du canal 36 vers le canal de sortie 37 et peut s'ouvrir dans le canal 36 en se déplaçant selon l'axe d'une branche du canal d'entrée 36 en forme de coude sensiblement perpendiculairement au canal de sortie 37.

Le dispositif de régulation 34 comprend également un élément thermostatique repéré d'une manière générale par la référence 46 qui est disposée selon l'axe de la soupape 44.

L'élément thermostatique 46 comprend un carter cylindrique 47 et une tige saillante 48. La tige saillante 48 de l'élément thermostatique 46 se trouve dans le canal de sortie 37 du boîtier 33 et son extrémité pénètre dans un trou borgne 49 réalisé dans une partie saillante 50 de la paroi 41 du boîtier 33 formé dans le canal de sortie 37. La soupape 44 présente une ouverture centrale dans laquelle pénètre la partie côté tige du carter 47 de l'élément thermostatique 46, la soupape 44 et le carter 47 étant fixé l'un à l'autre d'une manière étanche.

En face de la soupape 44 et du côté du canal d'entrée 36, un bloc 51 est monté sur le boîtier 33 dans la paroi 39 du canal d'entrée 36. Dans ce but, la paroi 39 du canal d'entrée 36 comprend une ouverture 52 et le bloc 51 comprend un bossage annulaire extérieur 53 qui permet le montage de ce bloc 51 dans l'ouverture 52 par sertissage.

Comme dans les exemples précédents, le bloc 51 comprend une tige centrale 54 située du côté de la soupape 44 et plus exactement en face et à distance de la face arrière du carter 47 de l'élément thermostatique 46 opposé à la tige 48. La tige 54 du bloc 51 peut, lors de son enfoncement, actionner un commutateur qui est disposé à l'intérieur du bloc 51 et qui n'a pas été représenté.

Sur sa face intérieure, en face de la soupape 44, le bloc 51 comprend des saillies axiales 55 qui s'avancent jusqu'au carter 47 de l'élément thermostatique 46 et qui délimite un passage central. Ces saillies 55 permettent de guider le carter 47 de l'élément d'étanchéité 46 lorsqu'il se déplace en direction de la tige 54.

Le dispositif de régulation 34 comprend également un ressort hélicoïdal 56 qui entoure les saillies 55 du bloc 51 et le carter 47 de l'élément thermostatique 46, ressort qui est situé dans le canal d'entrée 36 et qui prend appui d'une part sur la soupape 44 et d'autre part sur une surface frontale 57 du bloc 51.

Comme on peut le voir sur la figure 4, l'ouverture 52 du boîtier 33 a des dimensions qui permettent le montage du dispositif de régulation 34. En effet, pour le montage de ce dispositif, on introduit par l'ouverture 52 du boîtier 33 l'élément thermostatique 46 muni de la soupape 44 et on dispose l'extrémité de sa tige 48 dans le trou borgne 49 du boîtier 33, on dispose le ressort 56 en appui sur la soupape 44 et on dispose le bloc 51 sur le ressort 56. Après compression du ressort 56, on dispose le bloc 51 dans l'ouverture 52 du boîtier 33 et on le sertit sur ce boîtier grâce à son bossage annulaire 53.

On va maintenant décrire comment fonctionne le dispositif de commande d'écoulement 32 représenté sur la figure 4.

Lorsque l'élément thermostatique 46 est chauffé par le fluide de refroidissement, la cire qu'il contient dans son carter 47 se dilate et le carter 47 se déplace en direction du bloc 51 en prenant appui par sa tige 48 sur le boîtier 33 provoquant dans son mouvement l'ouverture de la soupape 44 qui lui est liée à l'encontre de la force excercée par le ressort 56. L'ouverture de la soupape 44 dépend évidement de la température du fluide de refroidissement et permet le contrôle de l'écoulement au travers du canal d'écoulement 35.

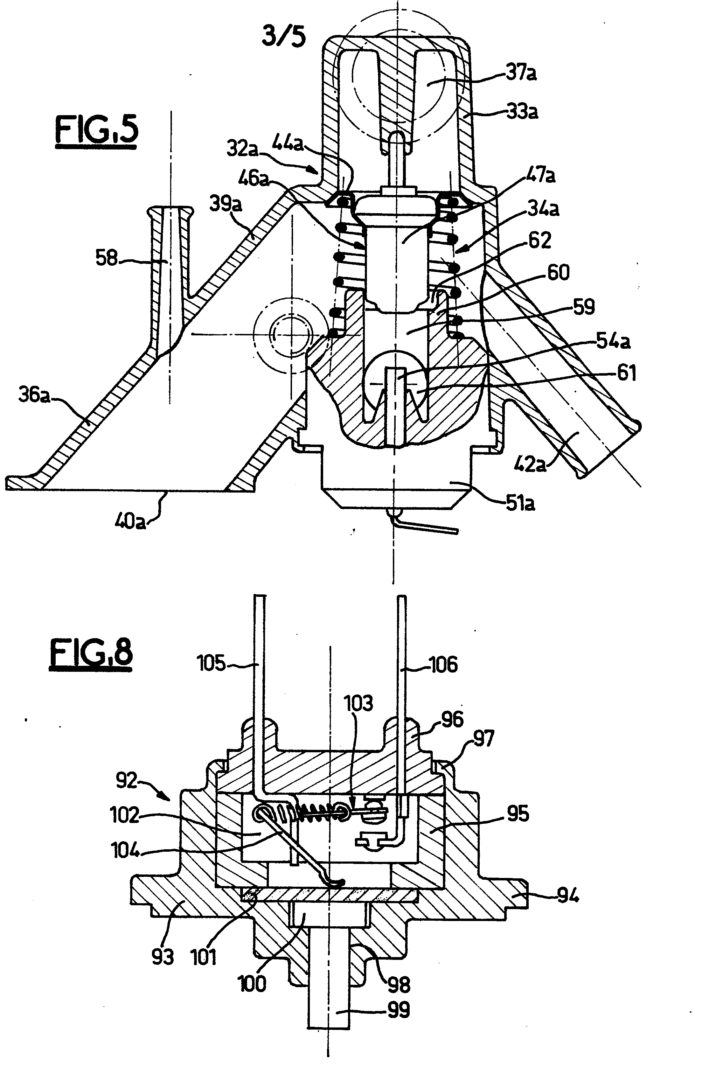

Le dispositif de contrôle et de régulation représenté sur la figure 5 et repéré d'une manière générale par la référence 32a est proche du dispositif représenté sur la figure 4 et comprend un dispositif de régulation 34a monté dans son boîtier 33a et fonctionnant de la même manière que le dispositif de régulation 34 représenté sur la figure 4.

Ce dispositif de contrôle et de régulation diffère de celui représenté sur la figure 4 essentiellement par la forme de son boîtier 33a et de son bloc 51a qui réalisent un circuit by-pass.

En effet, le boîtier 33a comprend un canal d'entrée 36a sensiblement en forme de S et dont la surface d'extrémité 40a de sa paroi 39a servant de surface d'appui du boîtier 33a lors de son montage sur un moteur est sensiblement perpendiculaire à l'axe du dispositif de régulation 34a. Son canal de sortie 37a s'étend sensiblement perpendiculairement au plan du canal 36a, perpendiculairement au plan du dessin. Le boîtier 33a comprend également un canal secondaire de sortie 42a communiquant avec le canal d'entrée 36a et formant une sortie vers le radiateur de chauffage de l'habitacle du véhicule et comprend également un canal secondaire de sortie 58 communiquant avec le canl d'entrée 36a, ce canal de sortie 58 pouvant être relié au carburateur du moteur de manière à chauffer celui-ci.

Le bloc 51a ne comprend plus de saillie axiale mais comporte un évidement axial 59 dont la paroi 60 s'étend jusqu'au carter cylindrique 47a de l'élément thermostatique 46a, cet évidement 59 déterminant un passage pour le guidage du carter 47a lors de son déplacement en direction de la tige 54a du bloc 51a.

Dans le bloc 51a et le boîtier 33a est formé un passage secondaire de sortie 61 qui s'étend perpendiculairement à l'évidement 59 et qui permet de faire communiquer l'intérieur de cet évidement 59 avec l'extérieur du boîtier. De plus, la partie d'extrémité de la paroi 60 de l'évidement 59 du bloc 51a comporte un arrachement 62 qui permet une communication entre le canal d'entrée 36a et l'évidement 59. L'extrémité extérieure du passage secondaire de sortie 61 peut être reliée directement au circuit intérieur du moteur.

Ainsi, l'arrachement 62, l'évidement 59 et le passage de sortie secondaire 61 peuvent former un circuit by-pass de recirculation directe du liquide de refroidissement lorsque la soupape 44a est complètement ou presque fermée. Après un court déplacement du carter 47a de l'élément thermostatique 46a, l'entrée 62 de l'évidement 59 est obturée par ce carter et une recirculation n'est plus possible.

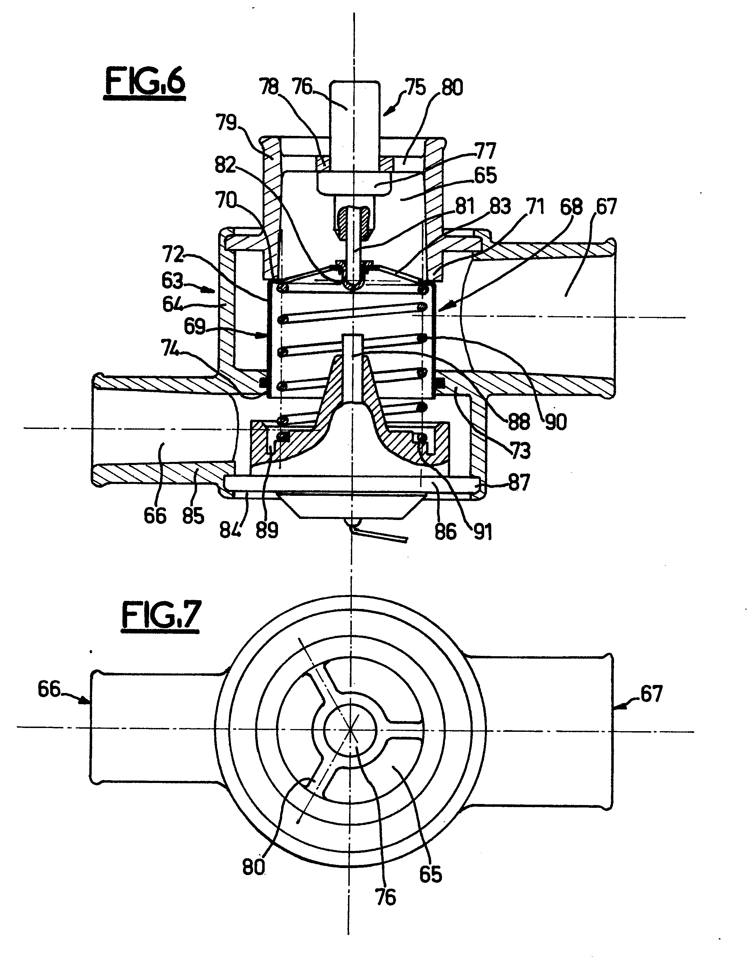

Les figures 6 et 7 montrent un dispositif de contrôle et de régulation relativement différent de ceux décrits ci-dessus. Elles montrent en effet un dispositif de contrôle et de régulation repéré d'une manière générale par la référence 63 qui est du type mélangeur et qui comprend un boîtier 64 comprenant un canal de sortie 65 qui peut être relié à l'entrée du circuit du liquide de refroidissement d'un moteur et deux canaux d'entrée 66 et 67 sensiblement perpendiculaires au canal de sortie 65 et décalés selon l'axe de ce canal, le canal d'entrée 66 communiquant latéralement avec le canal de sortie 65 et ce canal de sortie 65 communiquant latéralement avec le canal 67. Le canal d'entrée 66 peut être relié au circuit du liquide de refroidissement du moteur avant le radiateur et le canal d'entrée 67 peut être relié à la sortie du radiateur de refroidissement du fluide.

Le dispositif de contrôle et de régulation 63 comprend également un dispositif de régulation repéré d'une manière générale par la reférence 68 qui est monté dans le boîtier 64.

Ce dispositif de régulation 68 comprend une soupape 69 qui comporte une partie radiale annulaire 70 qui, en position de fermeture de la soupape 69, repose sur un siège de soupape 71 du boîtier 64 entourant le canal de sortie 65 et une partie en forme de cylindre 72 qui s'étend parallèlement au canal de sortie 65 et dans la direction opposée. Le canal 66 et le canal 67 sont séparés par une cloison 73 qui comporte une ouverture 74 disposée dans l'alignement du canal 65. En position de fermeture, la soupape 69 pénètre dans cette ouverture 74.

Lorsque la soupape 69 est en position de fermeture et en appui sur le siège de soupape 71, sa partie cylindrique 72 obture le passage entre le canal d'entrée 67 et le canal de sortie 65. Lorsqu'elle est ouverte, une communication entre le canal d'entrée 67 et le canal de sortie 65 est établie entre sa partie annulaire radiale 70 et le siège de soupape 71.

Le dispositif de régulation 68 comprend également un élément thermostatique 75 disposé dans le canal de sortie 65 selon son axe. Cet élément thermostatique 75 comprend un carter 76 qui comporte un épaulement annulaire 77 qui prend appui sur une bague annulaire 78 qui est reliée à la paroi 79 du canal de sortie 65 par des pattes 80 qui permettent le passage du fluide dans ce canal. Le carter 76 de l'élément thermostatique 75 prend appui sur la bague annulaire 78 du côté de la soupape 69.

L'élément thermostatique 75 comprend également une tige 81 qui s'étend vers la soupape 69 et qui pénètre dans une partie centrale 82 de cette soupape qui est reliée à sa partie annulaire radiale 70 par des pattes radiales 83 qui permettent le passage du fluide.

Dans une ouverture 84 pratiquée dans la paroi 85 du conduit d'entrée 66, en face de l'ouverture 74 et du canal de sortie 65, est monté par sertissage un bloc 86 qui comprend à l'intérieur un commutateur qui n'a pas été représenté. Pour son sertissage, ce bloc 86 comprend un bossage annulaire extérieur 87.

En face de la partie centrale 82 de la soupape 68, le bloc 86 porte une tige saillante 88 qui, lorsqu'elle est enfoncée dans ce bloc, provoque l'actionnement du commutateur qu'il contient.

Du côté intérieur, le bloc 86 comprend un évidement annulaire 89 qui est ménagé en face de la partie cylindrique 72 de la soupape 68, la partie d'extrémité de cette partie cylindrique 72 pouvant pénétrer dans cet évidement annulaire 89 de manière à obturer le passage entre le canal d'entrée 66 et le canal de sortie 65.

Le dispositif de régulation 68 comprend également un ressort hélicoïdal 90 s'étendant à l'intérieur de la soupape 69 et prenant appui d'une part sur la partie annulaire radiale 70 de cette soupape et d'autre part sur une surface radiale 91 du bloc 86.

Comme on peut le voir sur la figure 6, le diamètre de l'ouverture 84 du boîtier 64 permet le montage des différents éléments du dispositif de régulation 68 et du bloc 86. Pour effectuer ce montage, on dispose tout d'abord l'élément thermostatique 75 en appui contre la bague annulaire 78 en disposant sa tige 81 du côté de l'ouverture 84, on dispose la soupape 68 en faisant pénétrer l'extrémité de la tige 81 de l'élément thermostatique 75 dans sa partie centrale 82, on dispose le ressort 90 en appui sur la partie annulaire radiale 70 de la soupape 69, on dispose sur ce ressort 90 le bloc 86 que l'on fixe dans l'ouverture 84 du boîtier 64 par sertissage autour de son bossage 87 après avoir comprimé le ressort 90.

On va maintenant décrire comment fonctionne le dispositif de commande d'écoulement représenté sur les figures 6 et 7.

Lorsque la cire que contient l'élément thermostatique 75 n'est pas dilatée, une circulation du fluide de refroidissement a lieu du canal d'entrée 66 vers le canal de sortie 65 entre le bloc 86 et la soupape 69 et au travers de la partie cylindrique 72 de cette soupape si bien qu'on a une recirculation directe du liquide de refroidissement, le passage entre le canal d'entrée 67 et le canal de sortie 65 étant obturé par la partie cylindrique 72 de la soupape 69.

Lorsque l'élément thermostatique 75 est chauffé par le liquide de refroidissement, la cire qu'il contient se dilate et par là provoque le déplacement de sa tige 81 qui déplace la soupape 69 en direction du bloc 86 à l'encontre de la force exercée par le ressort 90. On ouvre ainsi le passage entre le canal d'entrée 67 et le canal de sortie 65 tout en conservant une communication entre le canal d'entrée 66 et le canal de sortie 65. On obtient donc ainsi un mélange entre le liquide entrant dans le boîtier par le canal 66 en provenance du moteur et le fluide entrant dans le boîtier par le canal 67 en provenance du radiateur.

Après un certain déplacement de la soupape 89, l'extrémité de sa partie cylindrique 72 pénètre dans l'évidement annulaire 89 du bloc et par là provoque l'obturation du passage entre le canal d'entrée 66 et le canal de sortie 65. Il n'y a donc plus qu'un écoulement au travers du canal d'entrée 67 et du canal de sortie 65 si bien que tout le liquide de refroidissement passe au travers du radiateur.

Après un déplacement déterminé de la tige 81, la partie centrale 82 de la soupape 69 entre en contact avec la tige 88 du bloc 86 et l'enfonce pour provoquer la commande du commutateur électrique qu'il contient. Un mouvement dans l'autre sens relache le commutateur.

La position de la tige 81 de l'élément thermostatique 75 dépend évidement de la température du liquide de refroidissement circulant autour de son carter 76.

Le dispositif de contrôle et de régulation 63 représenté sur les figures 6 et 7 peut également être utilisé comme distributeur. En effet, le canal 65 peut être un canal centré et être relié à la sortie du liquide de refroidissement du moteur, le canal 66 étant alors un canal de sortie de retour direct du liquide de refroidissement au circuit du moteur et le canal 67 formant un canal de sortie pouvant être relié au radiateur de refroidissement. On pourrait également prévoir sur le boîtier 64 un moyen permettant de fixer le dispositif de contrôle et de régulation 63 directement sur le moteur.

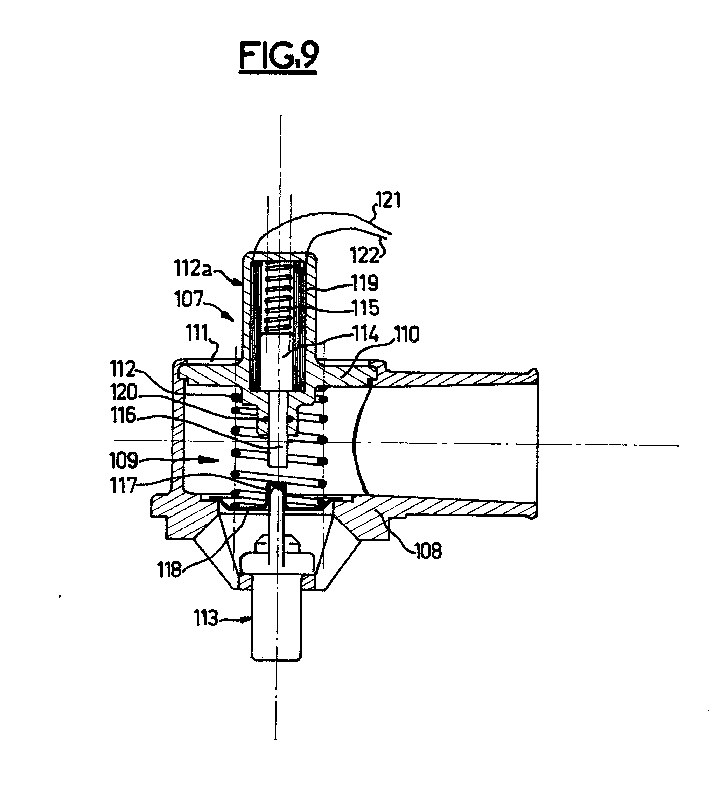

On va maintenant décrire en référence à la figure 8 un bloc repéré d'une manière générale par la référence 92 tel qu'il peut être conçu pour être monté dans l'un des dispositifs de contrôle et de régulation selon les figures 1, 2 ou 3, ce bloc devant subir les adaptations déjà décrites pour être utilisé dans les dispositifs décrits en référence aux figures 4, 5, 6 et 7.

Le bloc 92 comprend une cuvette 93 qui comporte un bossage périphérique 94 pour le sertissage de ce bloc dans le boîtier associé.

Dans la cuvette 93 est disposée une entretoise 95 sur laquelle est monté un support de contacts 96 qui est maintenu par un sertissage 97 de l'extrémité axiale de la cuvette 93. Dans le fond de la cuvette 93 est ménagé un passage central 98 dans lequel est disposé une tige 99 dont l'extrémité fait saillie du bloc 92 et dont l'autre extrémité comprend un épaulement 100 qui limite son mouvement vers l'extérieur.

Entre l'entretoise 95 et le fond de la cuvette 93 est disposé un disque souple ou membrane d'étanchéité 101 qui isole la chambre 102 formée à l'intérieur du bloc 92 de l'extérieur.

Disposé à l'intérieur de la chambre 102 du bloc 92, le support de contacts 96 porte un commutateur monostable repéré d'une manière générale par la référence 103 qui comprend un levier articulé 104 dont une extrémité est en contact avec l'élément d'étanchéité 101 et dont les plots sont reliées à des connexions électriques 105 et 106 qui font saillie à l'extérieur du support 96. Le levier 104 est monté avec ressort ne limite pas la course de la tige 99.

0058933

Lorsqu'on va agir sur la tige 99 de manière à l'enfoncer dans le bloc 92, son mouvement va être transmis au levier 104 du commutateur 103 par l'intermédiaire de la membrane d'étanchéité 101 et on va provoquer par là le court-circuitage des connexions 105 et 106. Lorsqu'on va relacher la tige 99, le commutateur 103 va revenir dans sa position de repos.

Les dispositifs pour le contrôle et la régulation de la température du liquide de refroidissement de moteurs à combustion interne qui viennent d'être décrits sont particulièrement interessants en ce sens qu'ils permettent, avec un minimum de pièces et une seule pièce à fixer au boîtier, de réguler l'écoulement du liquide de refroidissement du moteur associé dans le radiateur de refroidissement ainsi que la commande du ventilateur associé au radiateur pour accélérer le refroidissement du liquide de refroidissement, le moyen d'actionnement du ventilateur étant connecté électriquement au bloc muni d'un commutateur électrique qui est associé au dispositif de régulation. De plus, par un positionnement convenable entre la tige du bloc qui agit sur le commutateur que contient ce bloc et l'élément mobile du dispositif de régulation qui doit agir sur cette tige, la commande du ventilateur peut se produire uniquement lorsque la cire que contient l'élément thermostatique se trouve dans sa phase de dilatation résiduelle, ce qui signifie normalement que la soupape est complètement ouverte et que le radiateur ne suffit pas pour refroidir suffisamment le fluide de refroidissement.

Le dispositif de contrôle et de régulation représenté sur la figure 9 et repéré d'une manière générale par la référence 107 comprend un boîtier 108 et un dispositif d'actionnement repéré d'une manière générale par la référence 109 qui sont semblables à ceux du dispositif de contrôle et de régulation 1 représenté sur la figure 1, le dispositif d'actionnement 109 étant monté de la même manière.

Le bloc 110 qui est monté dans une ouverture 111 du boîtier 108 par sertissage et sur lequel prend appui le ressort 112 porte, non pas un commutateur, mais un capteur à réluctance variable repéré d'une manière générale par la référence 112a dont l'axe est en alignement avec l'axe de l'élément thermostatique 113. Le capteur 112 comprend notamment un noyau 114 sur lequel agit un ressort en direction de l'élément thermostatique 113. Le noyau 114 se prolonge en direction de l'élément thermostatique 113 par une tige 116 qui fait saillie du bloc 110 et dont l'extrémité se trouve à une faible distance de la saillie centrale 117 de la soupape 118. On peut noter que le capteur à réluctance variable est disposé dans une chambre 119 isolée du liquide de refroidissement et rendu étanche par un joint torique 120 entourant la tige saillante 116.

Grâce à un tel montage, on peut disposer sur les connexions de sortie 121 et 122 du capteur à réluctance variable 112 d'une grandeur électrique qui varie en fonction de l'enfoncement du noyau 114 provoqué par le déplacement de la soupape 118. Cette grandeur variable pourrait être interprétée notamment par un dispositif électronique qui commanderait par exemple le ventilateur de refroidissement du radiateur ou tout autre appareil.

Il est bien évident que la présente invention ne peut se limiter aux dispositifs pour le contrôle et la régulation de la température décrits en référence aux figures. On pourrait notamment remplacer le commutateur ou le capteur à réluctance variable disposé dans une chambre étanche par rapport à l'intérieur du boîtier par tout autre élément de commande et de réglage. On pourrait également supprimer ces éléments, les blocs fixés aux boîtiers formant alors uniquement des couvercles, et ces couvercles pouvant par ailleurs comprendre des passages axiaux si un écoulement au travers du couvercle est nécessaire. Bien d'autres variantes sont possibles sans sortir du cadre de la présente invention.

REVENDICATIONS

1. Dispositif pour le contrôle et la régulation de la température en particulier du liquide de refroidissement de moteurs à combustion interne, du type comprenant un boîtier ou conduit présentant au moins un passage d'écoulement principal comportant au moins un canal d'entrée et au moins un canal de sortie pour le liquide de refroidissement et un dispositif de régulation de l'écoulement du liquide dans ledit passage monté dans ledit boîtier comprenant une soupape susceptible de reposer sur un siège de soupape formé dans ledit boîtier pour obturer ledit passage entre lesdits canaux, un dispositif d'actionnement susceptible d'agir sur ladite soupape pour l'éloigner dudit siège et constitué par un élément thermostatique formé par un carter et une tige faisant saillie du carter et contenant une matière sensible à la température telle que de la cire, et un ressort prenant appui, d'une part, sur l'un des éléments mobiles du dispositif de régulation en vue de pousser ladite soupape vers le siège de soupape du boîtier, caractérisé par le fait qu'il comprend en outre un couvercle qui est monté de façon étanche dans une ouverture du boîtier formée en face de ladite soupape et sur lequel prend appui, d'autre part, ledit ressort, ledit couvercle portant au moins un élément de commande ou de réglage électrique, tel qu'un interrupteur, un commutateur ou un capteur à résistance variable, isolé du liquide de refroidissement et susceptible d'être actionné par l'un des éléments mobiles du dispositif de régulation lorsque ladite soupape se déplace dans le sens qui l'éloigne du siège de soupape du boîtier.

2. Dispositif selon la revendication 1, caractérisé par le fait que, ladite soupape s'ouvrant dans le sens de l'écoulement du fluide et ledit élément thermostatique étant en amont de ladite soupape et ayant son carter ou sa tige maintenu(e) au boîtier ou à une partie du boîtier et respectivement son carter ou sa tige relié(e) à ou en appui sur ladite soupape, ledit couvercle est fixé audit boîtier en aval de ladite soupape et en face de celle-ci, ledit ressort étant disposé entre ledit couvercle et ladite soupape.

3. Dispositif selon la revendication 1, caractérisé par le fait que ladite soupape s'ouvrant dans le sens contraire à l'écoulement du fluide et ledit élément thermostatique étant en amont de ladite soupape et ayant sa tige maintenue ou en appui sur ledit boîtier en aval de ladite soupape et son carter fixé à ladite soupape, ledit couvercle est fixé audit boîtier en amont de ladite soupape et en face de celle-ci, ledit ressort étant disposé entre ladite soupape et ledit couvercle.

4. Dispositif selon la revendication 3, caractérisé par le fait que ledit couvercle comprend des saillies axiales pour le guidage du carter de l'élément thermostatique.

5. Dispositif selon la revendication 3, caractérisé par le fait que ledit couvercle comprend un évidement axial pour le guidage du carter de l'élément thermostatique, que cet évidement communique avec l'extérieur par un passage secondaire formé dans ledit couvercle ou dans ledit couvercle et ledit boîtier et que ledit couvercle est tel que lorsque ladite soupape est fermée ou presque fermée un écoulement de fluide peut se produire de l'intérieur du boîtier vers l'extérieur au travers dudit évidement et dudit passage secondaire, ledit évidement et ledit passage secondaire formant un circuit by-pass.

6. Dispositif selon la revendication 1, caractérisé par le fait qu'il est du type mélangeur, ou respectivement du type distributeur, que ledit boîtier comprend deux canaux d'entrée et un canal de sortie, respectivement un canal d'entrée et deux canaux de sortie, que ledit élément thermostatique est disposé dans ledit canal de sortie, respectivement dans ledit canal d'entrée, que ladite soupape présente une partie en forme de cylindre qui obture l'un des canaux d'entrée, respectivement l'un des canaux de sortie, lorsque l'une de ses extrémités est en appui sur le siège de soupape qui entoure le canal de sortie, respectivement le canal d'entrée, et l'autre canal d'entrée, respectivement l'autre canal de sortie, lorsqu'elle est en position éloignée du siège de soupape et, qui entre ces deux positions, permet un mélangeage contrôlé des fluides entrant dans ledit boîtier par lesdits canaux d'entrée, respectivement une distribution contrôlée du fluide vers lesdits canaux de sortie, que ledit couvercle est fixé audit boîtier en face de ladite soupape pour coopérer avec l'autre extrémité de ladite partie cylindrique de la soupape pour obturer ledit autre canal d'entrée, respectivement ledit autre canal de sortie, et que ledit ressort est disposé entre ladite soupape et ledit couvercle.

7. Dispositif selon la revendication 6, caractérisé par le fait que ledit couvercle comprend un évidement annulaire axial dans lequel peut pénétrer l'extrémité de la partie cylindrique de la soupape de manière à obturer le passage entre ledit autre canal d'entrée et le canal de sortie, respectivement entre ledit canal d'entrée et ledit autre canal de sortie.

8. Dispositif selon l'une des revendications 6 et 7, caractérisé par le fait que ladite soupape comprend une partie annulaire d'extrémité s'étendant sensiblement radialement vers l'intérieur de ladite partie cylindrique et susceptible de prendre appui sur le siège de soupape et une partie centrale reliée à ladite partie annulaire radiale par des pattes radiales, la partie mobile de l'élément thermostatique prenant appui ou étant fixée à cette partie centrale et ledit ressort étant disposé entre ledit couvercle et ladite partie annulaire radiale.

9. Dispositif selon l'une quelconque des revendications précédentes, caractérisé par le fait que ledit couvercle est monté dans une ouverture du boîtier dont les dimensions permettent le montage des différentes parties du dispositif de régulation dans le boîtier par cette ouverture.

10. Dispositif selon l'une quelconque des revendications précédentes, caractérisé par le fait que ledit couvercle est monté dans l'ouverture du boîtier par sertissage.

11. Dispositif selon l'une quelconque des revendications précédentes, caractérisé par le fait que ledit couvercle porte une tige saillante susceptible d'être enfoncée par ledit élément mobile du dispositif de régulation en vue d'agir sur ledit élément de commande ou de réglage électrique.

12. Dispositif selon la revendication 11, caractérisé par le fait que ladite tige saillante est en alignement avec l'axe de ladite soupape ou dudit élément thermostatique.

13. Dispositif selon l'une quelconque des revendications précédentes, caractérisé par le fait que ledit couvercle comprend une chambre étanche par rapport à l'intérieur du boîtier, chambre dans laquelle est disposé ledit élément de commande ou de réglage électrique.

14. Dispositif selon l'une quelconque des revendications précédentes, caractérisé par le fait que ledit élément mobile du dispositif de régulation agit sur ledit élément de commande ou de réglage électrique lors de la dilatation résiduelle de la cire.

15. Dispositif selon l'une quelconque des revendications précédentes, caractérisé par le fait que ledit élément de commande ou de réglage électrique est dans le circuit électrique de commande du ventilateur associé au radiateur dans lequel circule le liquide de refroidissement, pour commander ce ventilateur.

0058933

FIG.1
20
21
24
23
22
3
6
25
2
4
1
19
9
8
17
7
5
16
13
14
15
18
11
12
10
FIG.2
20a
23a
2a
24a
4a
1a
8a
17a
18a
16a
26
5a
11a
13a
14a

FIG.3
20b
24b
23b
10b
6b
4b
1b
2b
18b
11b
31
30
5b
13b
14b
29
28
27
8b
FIG.4
50
49
41
37
33
35
48
38
32
45
44
36
34
47
56
55
57
40
42
43
46
58
54
53
39
52
51

FIG.5
37a
33a
32a
44a
47a
46a
39a
34a
58
62
60
59
54a
61
36a
42a
51a
40a
FIG.8
105
106
103
96
97
92
102
95
104
94
93
101
100
98
99

FIG.6

FIG.7

FIG.9
121
122
112a
107
119
115
111
114
110
112
120
116
109
117
118
108
113

0058933

Numéro de la demande

EP 82 10 1183

Office européen des brevets

# RAPPORT DE RECHERCHE EUROPEENNE

| Catégorie | DOCUMENTS CONSIDERES COMME PERTINENTS — Citation du document avec indication, en cas de besoin, des parties pertinentes | Revendication concernée | CLASSEMENT DE LA DEMANDE (Int. Cl. 3) |
|---|---|---|---|
| | DE - A - 1 938 097 (G. WAHLER) | | F 01 P 7/08<br>G 05 D 23/02 |
| | * Page 3, ligne 1 à page 4, ligne 3; figure * | 1,2,6,7,9 | |
| | -- | | |
| | FR - A - 1 570 258 (ROBERT BOSCH) | | |
| | * Page 2, ligne 28 à page 4, ligne 4; figures 1,4,6 * | 1,11,12,14,15 | |
| | -- | | DOMAINES TECHNIQUES RECHERCHES (Int. Cl. 3) |
| | DE - A - 1 900 746 (P. NOTTE) | | |
| | * Page 2, lignes 6 à 27; figure * | 1,4-6,9,10 | G 05 D<br>F 01 P |
| | -- | | |
| | FR - A - 2 046 260 (EATON YALE) | | |
| | * Page 3, ligne 29 à page 4, ligne 27; page 5, ligne 23 à page 6, ligne 5; figure * | 3 | |
| | -- | | |
| | FR - A - 2 332 879 (BRITISH LEYLAND) | | |
| | * Page 3, lignes 1 à 34; figures 1,2 * | 1,4 | |
| | -- | | CATEGORIE DES DOCUMENTS CITES |
| | GB - A - 1 567 605 (GENERAL MOTORS) | | X: particulièrement pertinent à lui seul<br>Y: particulièrement pertinent en combinaison avec un autre document de la même catégorie<br>A: arrière-plan technologique<br>O: divulgation non-écrite<br>P: document intercalaire<br>T: théorie ou principe à la base de l'invention<br>E: document de brevet antérieur, mais publié à la date de dépôt ou après cette date<br>D: cité dans la demande<br>L: cité pour d'autres raisons |
| | * Page 1, ligne 66 à page 2, ligne 49; figures 1-3 * | 1,4 | |
| | -- | | |
| | FR - A - 2 254 717 (GILARDINI) | | |
| | * Page 3, ligne 2 à page 4, ligne | 1,8 | |
| | ./. | | &: membre de la même famille, document correspondant |

X — Le présent rapport de recherche a été établi pour toutes les revendications

| Lieu de la recherche | Date d'achèvement de la recherche | Examinateur |
|---|---|---|
| La Haye | 17-05-1982 | HELOT |

Office européen
des brevets

# RAPPORT DE RECHERCHE EUROPEENNE

Numéro de la demande

EP 82 10 1183



| DOCUMENTS CONSIDERES COMME PERTINENTS | | | CLASSEMENT DE LA DEMANDE (Int. Cl.3) |
|---|---|---|---|
| Catégorie | Citation du document avec indication, en cas de besoin, des parties pertinentes | Revendication concernée | |
| | 13; figures 1,2 *<br>--<br>FR - A - 2 243 513 (ROBERT BOSCH)<br>* Page 1, lignes 1 à 24; figure 1 *<br>---- | 13 | |
| | | | DOMAINES TECHNIQUES RECHERCHES (Int. Cl.3) |